# EUROPÄISCHE PATENTANMELDUNG

(11) **EP 2 521 229 A1**
(43) Veröffentlichungstag der Anmeldung: **07.11.2012**
(21) Anmeldenummer: 11165094.1
(22) Anmeldetag: 06.05.2011
(51) Int. Cl.: H02B 1/28

(54) **Schaltschrank**

(71) Anmelder: SIEMENS AKTIENGESELLSCHAFT, 80333 München (DE)
(72) Erfinder: Geldner, Florian, 91054, Erlangen (DE)

(57) **Zusammenfassung**

Es wird ein für unterschiedliche Anwendungsfälle flexibel anpassbarer Schaltschrank (1) angegeben. Der Schaltschrank (1) umfasst ein Gehäuse (2) sowie eine Tür (3), mit der das Gehäuse (2) verschließbar ist. An einem frontseitigen Gehäuserand (10) ist eine erste, zumindest im Wesentlichen um den Gehäuserand (10) umlaufende Dichtkante (11) angebracht. Zusätzlich zur ersten Dichtkante (11) ist eine zweite, ebenfalls zumindest im Wesentlichen um den Gehäuserand (10) umlaufende, zweite Dichtkante (12) angebracht. Bestimmungsgemäß korrespondiert dabei die erste Dichtkante (11) mit einer in der Tür (3) eingelegten oder einlegbaren ersten Dichtung (35), während die zweite Dichtkante (12) bestimmungsgemäß mit einer in der Tür (3) eingelegten oder einlegbaren zweiten Dichtung (36) korrespondiert.

## Beschreibung

Die Erfindung bezieht sich auf einen Schaltschrank, das heißt einen Schrank zur Aufnahme von elektrischen und/oder elektronischen Komponenten, beispielsweise zur Aufnahme eines Umrichters.

Ein Schaltschrank umfasst üblicherweise ein Blechgehäuse, das mit einer Tür verschließbar ist. Diese Tür ist häufig entlang ihres Randes mit einer umlaufenden Dichtung zum Schutz vor Schmutz, insbesondere Staub, Öl und/oder Spritzwasser, versehen. Eine solche (mechanische) Dichtung ist im Folgenden auch als "Schmutzdichtung" bezeichnet. In einer üblichen Bauform wird diese Dichtung bei geschlossener Tür zur Herstellung ihrer Dichtfunktion gegen eine am Gehäuse umlaufende Dichtkante gepresst.

Oft soll ein Schaltschrank jedoch zur Gewährleistung der elektromagnetischen Verträglichkeit (EMV) auch mit einem Schutz gegen elektromagnetische Strahlung) versehen sein. Ein solcher Schutz ist im Folgenden auch als "EMV-Dichtung" bezeichnet. Herkömmlicherweise wird in diesem Fall oft eine vorhandene Schmutzdichtung einfach durch eine EMV-Dichtung ersetzt. Eine EMV-Dichtung bietet jedoch regelmäßig einen nur vergleichsweise geringen Schutz gegen eindringenden Schmutz.

Der Erfindung liegt die Aufgabe zugrunde, einen Schaltschrank anzugeben, der für unterschiedliche Anwendungsfälle flexibel anpassbar ist. Insbesondere soll der Schaltschrank sowohl an hohe EMV-Anforderungen als auch an hohe Dichtheitsanforderungen anpassbar sein.

Diese Aufgabe wird erfindungsgemäß gelöst durch die Merkmale des Anspruchs 1. Demnach umfasst der Schaltschrank ein Gehäuse, sowie eine Tür, mit der das Gehäuse verschließbar ist. Das Gehäuse und/oder die Tür sind dabei vorzugsweise aus Stahlblech gefertigt.

An einem der Tür zugewandten, frontseitigen Gehäuserand ist eine zumindest im Wesentlichen um den Gehäuserand umlaufende erste Dichtkante angebracht. Zusätzlich zu der ersten Dichtkante ist eine zweite Dichtkante an dem Gehäuserand angebracht, die den Gehäuserand mit Abstand innenseitig zu der ersten Dichtkante zumindest im Wesentlichen umläuft.

Bestimmungsgemäß korrespondiert dabei die erste Dichtkante mit einer in der Tür eingelegten oder einlegbaren ersten Dichtung, während die zweite Dichtkante bestimmungsgemäß mit einer in der Tür eingelegten oder einlegbaren zweiten Dichtung korrespondiert.

Vorteilhafterweise kann der Schaltschrank durch die Ausstattung mit zwei separaten Dichtkanten somit beliebig mit einer oder zwei Dichtungen ausgestattet werden, wobei diese Dichtungen vorzugsweise unterschiedliche Dichteigenschaften haben.

In zweckmäßiger Weise ist dabei die mit der ersten Dichtkante zusammenwirkende erste Dichtung als Schmutzdichtung ausgebildet, die den Innenraum des Schaltschranks gegen eindringenden Schmutz schützt. Insbesondere ist diese Schmutzdichtung durch einen an einer Rückseite der Tür in Gegenüberstellung zu der ersten Dichtkante angebrachten wasserabweisenden und elastischen Dichtstreifen gebildet. In zweckmäßiger Ausführung besteht dieser Dichtstreifen aus einem Polyurethanschaum, der insbesondere direkt in die Tür eingeschäumt ist.

Als zweite Dichtung ist vorzugsweise zum Schutz gegen eindringende und austretende elektromagnetische Strahlung an der Rückseite der Tür ein EMV-Gewebedichtband in Gegenüberstellung zu der zweiten Dichtkante angebracht. Das EMV-Gewebedichtband besteht insbesondere aus einem Band aus einem metallisierten Gewebe oder Vlies oder einem Gewebe mit eingewebten elektrisch leitfähigen Materialien.

Zur Erzielung einer besonders guten Dichtwirkung läuft jede der beiden Dichtkanten vorzugsweise ununterbrochen um den frontseitigen Gehäuserand herum. Ohne wesentliche Verschlechterung der (mechanischen oder elektromagnetischen) Dichtwirkung kann jede der beiden Dichtkanten jedoch in kleinen Abschnitten, deren Länge zu der Gesamtlänge des frontseitigen Gehäuserands vernachlässigbar ist, auch unterbrochen sein. Insbesondere können die Dichtkanten im Sinne einer vereinfachten Fertigung des Gehäuses in den Ecken des frontseitigen Gehäuserandes unterbrochen sein.

Zweckmäßigerweise sind die erste und zweite Dichtkante in ihrer jeweiligen Längserstreckung zumindest abschnittsweise im Wesentlichen parallel zueinander ausgerichtet. Bezüglich eines Türblatts der bestimmungsgemäß geschlossenen Tür sind die beiden Dichtkanten im Wesentlichen gleich beabstandet, d.h. die beiden Dichtkanten weisen in jedem Punkt in etwa den gleichen Abstand zum Türblatt auf, so dass die einzusetzenden Dichtungen in ihrer Stärke einheitlich dimensioniert werden können.

In einer einfach realisierbaren, gleichzeitig aber effektiven Ausführungsform ist eine der beiden Dichtkanten durch einen zur Tür hin ausgebogenen Rand einer aus Stahlblech bestehenden (Gehäuse-)Wand des Gehäuses gebildet, während die andere Dichtkante durch einen zur Tür hin ausgebogenen Rand eines auf die Gehäusewand aufgesetzten Blechbandes gebildet ist. Das aufgesetzte, insbesondere auf die Gehäusewand aufgeschweißte Blechband bildet insbesondere die zweite Dichtkante aus. Das Blechband ist hierzu innenseitig auf die Gehäusewand aufgesetzt. Alternativ kann das Blechband aber auch außenseitig auf die Gehäusewand aufgesetzt sein und in diesem Fall die erste Dichtkante ausbilden.

In einer konstruktiv einfachen und vorteilhaften Ausführungsform sind der die eine Dichtkante bildende Rand der Gehäusewand und der die andere Dichtkante bildende Rand des auf die Gehäusewand aufgesetzten Blechstreifens voneinander "V"-förmig, insbesondere in einem Winkel von etwa 70°-90° voneinander weggebogen.

Um eine Verletzung der jeweiligen Dichtung durch die erste oder zweite Dichtkante mit einfachen Mitteln sicher zu vermieden, sind die Gehäusewand und/oder der darauf aufgesetzte Blechstreifen an dem jeweils frontseitigen Rand um 180° gefalzt, wobei die jeweilige Dichtkante in diesem Fall durch den Falz gebildet wird.

Die oder jede Dichtung ist insbesondere als am Türrand umlaufender, insbesondere geschlossener, Rahmen ausgebildet. Bevorzugt sind die Dichtungen derart dimensioniert, dass die äußere Dichtung am Türrand näherungsweise bündig abschließt, während die innere Dichtung gegebenenfalls näherungsweise an einem Innenrand der äußeren Dichtung anliegt.

Nachfolgend wird ein Ausführungsbeispiel der Erfindung anhand einer Zeichnung näher erläutert. Darin zeigen:
- FIG 1: in schematischer, perspektivischer Darstellung ei-nen Schaltschrank mit zwei umlaufenden Dichtkanten, und
- FIG 2: in schematischer Querschnittsdarstellung einen frontseitigen Rand des Schaltschranks gemäß FIG 1 mit den beiden Dichtkanten.

Einander entsprechende Teile und Größen sind in allen Figuren stets mit den gleichen Bezugszeichen versehen.

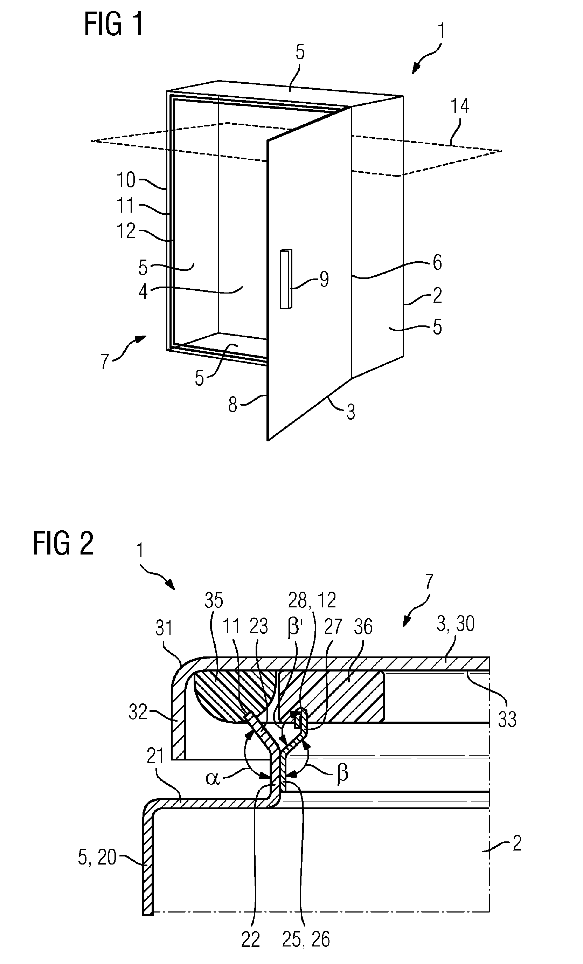

FIG 1 zeigt einen Schaltschrank 1, welcher ein quaderförmiges Gehäuse 2 sowie eine rechteckige Tür 3 zum Verschließen des Gehäuses 2 umfasst. Das Gehäuse 2 ist aus einer Rückwand 4 sowie vier Seitenwänden 5 gebildet. Sowohl das Gehäuse 2 als auch die Tür 3 sind aus Stahlblech gefertigt.

Die Tür 3 ist an einer Längskante 6 an einer der Seitenwände 5 angeschlagen und bildet im geschlossenen Zustand eine zur Rückwand 4 entgegengesetzte Frontseite 7 des Schaltschranks 1. In der Nähe einer zu der Längskante 6 gegenüberliegenden Längskante 8 ist ein Griff 9 zum Öffnen und Schließen der Tür 3 angebracht.

Jede der Seitenwände 5 ist an einem frontseitigen (Gehäuse-) Rand 10 mit einer ersten, äußeren Dichtkante 11 sowie mit einer zweiten, inneren Dichtkante 12 versehen. Beide Dichtkanten 11, 12 sind bezüglich des frontseitigen Gehäuserandes 10 umlaufend ausgebildet, erstrecken sich also im Wesentlichen ununterbrochen und rahmenartig um den frontseitigen Rand 10 herum. Die beiden Dichtkanten 11, 12 sind dabei parallel zueinander ausgerichtet.

Die beiden Dichtkanten 11, 12 sind in FIG 2 in einer ausschnitthaften Querschnittsdarstellung des Schaltschranks 1 entlang einer Schnittebene 14 (FIG 1) gezeigt. In FIG 2 ist die Tür 3 geschlossen dargestellt.

FIG 2 ist zu entnehmen, dass jeweils ein eine Seitenwand 5 des Gehäuses 2 bildendes Stahlblech 20 am jeweils frontseitigen Rand 10 unter Bildung eines Randabschnitts 21 zunächst etwa rechtwinklig nach innen gebogen ist. Daran anschließend ist das Stahlblech 20 unter Bildung eines Stegs 22 wiederum in etwa rechtwinklig zur Frontseite 7 hin umgebogen. Angrenzend an den Steg 22 ist das Stahlblech 20 in einem stumpfen Winkel α von etwa 140° unter Bildung eines Dichtbandes 23 nach außen gebogen. Der frontseitige Rand des Dichtbandes 23 bildet dabei die äußere Dichtkante 11.

In der hier dargestellten Ausführungsform sind der Randabschnitt 21, der Steg 22 sowie das Dichtband 23 mit der Dichtkante 11 einstückig (monolithisch) aus dem Stahlblech 20 der Seitenwand 5 gefertigt. Grundsätzlich ist jedoch auch denkbar, diese Teile aus mehreren, zunächst separat gefertigten und erst nachträglich miteinander verbundenen Bauteilen zu bilden.

An dem Steg 22 ist ein Blechband 25 angeschweißt, das mit einem Steg 26 ganzflächig an dem Steg 22 der Seitenwand 5 anliegt. Ausgehend von dem Steg 26 ist das Blechband 25 in einem stumpfen Winkel β von ebenfalls etwa 140° unter Bildung eines weiteren Dichtbandes 27 nach innen gebogen. An dem von dem Steg 26 abgewandten Ende ist das Dichtband 27 zunächst in einem weiteren Winkel β' von wiederum etwa 140° zur Frontseite 7 hin umgebogen und daran angrenzend zur Stabilisierung und zur Entschärfung des frontseitigen Randes 28 um 180° gefalzt. Der Falz bildet dabei die zweite Dichtkante 12. Im Querschnitt bilden die beiden Stege 22, 26 sowie die beiden Dichtbänder 23, 27 näherungsweise die Form eines Buchstaben "Y".

Die Tür 3 umfasst ein Türblatt 30, das mit seinen jeweiligen Außenkanten 31 die beiden Dichtkanten 11, 12 überragt. An die Außenkanten 31 des Türblatts 30 schließt sich ein etwa rechtwinklig abgewinkelter, umlaufender Seitenrand 32 an. Im geschlossenen Zustand der Tür 3 umschließt dabei der Seitenrand 32 die Dichtkanten 11 und 12.

An einer dem Gehäuse 2 zugewandten Rückseite 33 der Tür 3 bzw. des Türblatts 30 sind entlang des Seitenrands 32 eine erste, äußere Dichtung 35 aus einem umlaufenden Band aus einem Polyurethanschaum, sowie daran angrenzend eine zweite, innere Dichtung 36 aus einem umlaufenden Band aus einem metallisierten Gewebe in die Tür 3 eingeklebt. Beide Dichtungen 35,36 weisen in einer Draufsicht auf das Türblatt 30 im Wesentlichen die Form eines rechteckigen Rahmens auf. Die äußere Dichtkante 11 presst bei geschlossener Tür 3 gegen die äußere Dichtung 35, während die innere Dichtkante 12 gegen die innere Dichtung 36 presst. Die äußere Dichtung 35 dient zum Schutz des Schaltschrankinnenraums vor Schmutz, insbesondere Staub und Spritzwasser, während die innere Dichtung 36 als EMV-Dichtung dient.

Der solchermaßen ausgestattete Schaltschrank 1 erfüllt hinsichtlich seiner Staub- und Wasserdichtheit die Anforderungen der Norm UL50E Type 12, und hinsichtlich seiner EMV-Eigenschaften die Anforderungen der Filterklasse B.

Die durch die Anmeldung geschützte Erfindung wird durch das vorstehend beschriebene Ausführungsbeispiel nicht beschränkt. Vielmehr können vielfältige weitere Ausführungsvarianten der Erfindung von dem Fachmann gefunden werden.

## Patentansprüche

1. Schaltschrank (1) mit einem Gehäuse (2) sowie mit einer Tür (3) zum Verschließen einer Frontseite (7) des Gehäuses (2), wobei an einem frontseitigen Gehäuserand (10) eine den Gehäuserand (10) zumindest im Wesentlichen umlaufende erste Dichtkante (11) zur Zusammenwirkung mit einer an der Tür (3) befestigten oder zu befestigenden ersten Dichtung (35) sowie eine den Gehäuserand (10) mit Abstand innerhalb der ersten Dichtkante (11) zumindest im Wesentlichen umlaufende zweite Dichtkante (12) zur Zusammenwirkung mit einer an der Tür (3) befestigten oder zu befestigenden zweiten Dichtung (36) angebracht sind.

2. Schaltschrank (1) nach Anspruch 1, wobei als erste Dichtung (35) an einer Rückseite (33) der Tür (3) in Gegenüberstellung zu der ersten Dichtkante (11) ein wasserabweisender, elastischer Dichtstreifen Schutz vor eindringendem Schmutz angebracht ist.

3. Schaltschrank (1) nach Anspruch 2, wobei der die erste Dichtung (35) bildende Dichtstreifen aus einem Polyurethanschaum gebildet ist.

4. Schaltschrank (1) nach einem der Ansprüche 1 bis 3, wobei als zweite Dichtung (36) an einer Rückseite (33) der Tür (3) in Gegenüberstellung zu der zweiten Dichtkante (12) ein EMV-Gewebedichtband zum Schutz gegen eindringende und austretende elektromagnetische Strahlung angebracht ist.

5. Schaltschrank (1) nach einem der Ansprüche 1 bis 4, wobei das Gehäuse (2) eine aus Stahlblech (20) bestehende Gehäusewand (5) aufweist, wobei die erste oder zweite Dichtkante (11) an einem zur Tür (3) hin ausgebogenen Randabschnitt (23) der Gehäusewand (5) gebildet ist, und wobei die jeweils andere Dichtkante (12) an einem zur Tür (3) hin ausgebogenen Randabschnitt (28) eines auf die Gehäusewand (5) aufgesetzten Blechbandes (25) gebildet ist.

6. Schaltschrank (1) nach Anspruch 5, wobei die Gehäusewand (5) und das Blechband (25) zur Tür (3) hin zur Bildung der Dichtkanten (11,12) "V"-förmig voneinander weggebogen sind.

7. Schaltschrank (1) nach den Ansprüchen 5 oder 6, wobei die Gehäusewand (5) und/oder das Blechband (25) an ihrem bzw. seinem frontseitigen Rand (28) unter Bildung der Dichtkante (12) um 180° gefalzt sind.
